# EUROPEAN PATENT SPECIFICATION

(11) **EP 4 091 816 B1**
(45) Date of publication and mention of the grant of the patent: **16.10.2024**
(21) Application number: 20913432.9
(22) Date of filing: 07.12.2020
(51) Int. Cl.: B41M 5/28, G09F 3/02, G09F 3/10, B41M 5/26

(54) **MULTILAYER BODY**
MEHRSCHICHTIGER KÖRPER
CORPS MULTICOUCHE

(30) Priority: 14.01.2020 JP 2020003968
(43) Date of publication of application: 23.11.2022
(73) Proprietor: Nippon Carbide Industries Co., Inc., Tokyo 108-8466 (JP)
(72) Inventor: YONEDA, Daisuke, Namerikawa-shi, Toyama 936-8555 (JP); MATSUNO, Misato, Namerikawa-shi, Toyama 936-8555 (JP)
(74) Representative: Hoffmann Eitle
(86) International application number: PCT/JP2020/045382
(87) International publication number: WO 2021/145093

(56) References cited:
- WO-A1-2019/152671
- JP-A- 2008 265 074
- JP-A- 2011 126 142
- JP-A- 2011 170 105
- JP-A- 2016 190 451
- No further relevant documents disclosed

## Description

### Technical Field

The present invention relates to a multilayer body.

### Background Art

As labels for indicating various types of information such as characters and two-dimensional codes, a laser marking label is known in which various types of information are marked by irradiation with laser light. Examples of the laser marking label include: a color development type laser marking label in which various types of information are printed by color development of a resin with laser light; and an etching type laser marking label in which a surface layer is etched by laser light to expose a lower layer, and thus various types of information are printed.

In the color development type laser marking label, a color development layer contains a pigment whose color is changed by laser light. Therefore, printing is carried out by the change in color of the pigment by laser light and by carbonization of a resin contained in the color development layer by heat. This laser marking label can inhibit release of dust during laser marking, and can also be provided with a film layer on the color development layer. This internal color development type laser marking label is advantageous in that there is less risk of print loss due to external release of dust, surface abrasion, and chemical drops.

The laser marking label may also be used as a traceability label. In this usage, the label that has completed the traceability role may be peeled off. For this reason, the laser marking label as a traceability label is demanded not only to have good print readability but also to have good removability (which refers to a property of a label to be cleanly peeled off from an adherend without remaining thereon).

### Citation List

### [Patent Literature]

[Patent Literature 1]
Japanese Patent Application Publication Tokukai No. 2016-190451 (Publication date: November 10, 2016)

### Summary of Invention

### Technical Problem

However, in the conventional internal color development type laser marking label, dust generated from the color development layer during laser marking and heat generated during laser marking may cause blistering of the label, resulting in poor distinguishability of the laser marking label. For removability of a laser marking label, adherence between the surface layer and the color development layer is important. However, there is a problem that dust generation during laser marking also causes the adherence between the surface layer and the color development layer to be lowered, and this deteriorates removability.

For example, Patent Literature 1 indicates that, by providing an intermediate layer having a specific composition between a surface layer and a color development layer of a laser label, blistering that may occur by dust generation and heat generation during laser marking can be inhibited, and the distinguishability of the laser marking portion can be improved.

However, in the laser label of Patent Literature 1, the intermediate layer is provided between the surface layer and the color development layer, and this causes the following problems, i.e., there is room for improvement in that a production process of the laser label is complicated and a production cost is increased.

An object of an aspect of the present invention is to provide a multilayer body which has good print readability and good removability as an internal color development type laser marking label, in particular, as a traceability label.

### Solution to Problem

In order to attain the object, a multilayer body in accordance with an aspect of the present invention is a multilayer body for use in a laser marking label, and is configured to include: a first layer that allows laser light to pass through; a second layer that develops a color with the laser light; and a third layer that has adhesiveness, the first layer, the second layer, and the third layer being stacked in this order, the second layer consisting of a resin composition containing an acrylic-based copolymer, an isocyanate-based crosslinking agent, a color development pigment, and a white pigment, the isocyanate-based crosslinking agent being selected from (i) an aromatic-aliphatic isocyanate-based crosslinking agent or (ii) a mixture of an aliphatic or alicyclic isocyanate-based crosslinking agent and an aromatic isocyanate-based crosslinking agent, a contained amount of the isocyanate-based crosslinking agent being not less than 5 parts by mass and not more than 40 parts by mass with respect to 100 parts by mass of the acrylic-based copolymer, and the second layer being in contact with the first layer. The "aromatic-aliphatic isocyanate-based crosslinking agent" is intended to be a crosslinking agent derived from an aromatic-aliphatic isocyanate compound having a structure in which an isocyanate group and an aromatic ring are coupled to each other via an alkylene group in a molecule.

### Advantageous Effects of Invention

In the multilayer body in accordance with an aspect of the present invention, generation of dust in the second layer during laser marking is inhibited, and adherence between the first layer and the second layer and toughness of the second layer are improved as compared with a conventional laser marking label. As a result, the multilayer body in accordance with an aspect of the present invention brings about an effect of being a multilayer body that has good print readability and good removability.

### Brief Description of Drawings

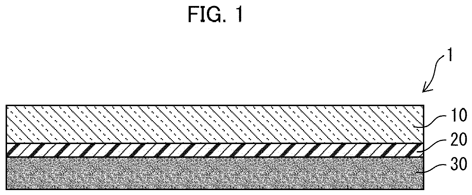

Fig. 1 is a diagram schematically illustrating an example of a cross-sectional structure of a multilayer body in accordance with an embodiment of the present invention.

### Description of Embodiments

The following description will discuss an embodiment of the present invention in detail. Note that, in this specification, "parts by mass" and "% by mass" mean a value obtained on a solid content basis unless otherwise specified, and "mass" is considered as a synonym for "weight". Moreover, the expression "A to B", representing a numerical range, herein means "not less than A and not more than B" unless otherwise specified in this specification.

### [Multilayer body]

The multilayer body in accordance with an aspect of the present invention is a multilayer body for use in a laser marking label. In the multilayer body, a first layer that allows laser light to pass through, a second layer that develops a color with the laser light, and a third layer that has adhesiveness are stacked in this order. The second layer consists of a resin composition containing an acrylic-based copolymer, an isocyanate-based crosslinking agent, a color development pigment, and a white pigment. The isocyanate-based crosslinking agent is selected from (i) an aromatic-aliphatic isocyanate-based crosslinking agent or (ii) a mixture of an aliphatic or alicyclic isocyanate-based crosslinking agent and an aromatic isocyanate-based crosslinking agent. A contained amount of the isocyanate-based crosslinking agent is not less than 5 parts by mass and not more than 40 parts by mass with respect to 100 parts by mass of the acrylic-based copolymer. The second layer is in contact with the first layer.

In the multilayer body in accordance with an aspect of the present invention, with the above configuration, generation of dust in the second layer during laser marking is inhibited, and adherence between the first layer and the second layer and toughness of the second layer are improved as compared with a conventional laser marking label. As a result, the multilayer body in accordance with an aspect of the present invention brings about an effect having good print readability and good removability. In particular, the multilayer body in accordance with an aspect of the present invention brings about an excellent effect of having good print readability and good removability after being placed in a high temperature and high humidity environment (e.g., 85°C, 85% humidity) for a predetermined period (e.g., 96 hours).

Here, the term "print readability" of the multilayer body refers to legible property of a print portion (also referred to as "laser marking portion") in the multilayer body after laser marking. This specification assumes a particularly harsh environment, such as warehousing or transportation by sea in summer, among environments in which the multilayer body in accordance with an aspect of the present invention is used as a traceability label. In particular, the legible property of the print portion is evaluated after the multilayer body, which has been subjected to laser marking, is placed in a high temperature and high humidity environment (also referred to as "promotion environment") for a predetermined period. The print readability of the multilayer body which has been placed in the promotion environment for the predetermined period can be evaluated, for example, by a method described in Examples described later.

The term "removability" of the multilayer body refers to a property with which the multilayer body, which has been subjected to laser marking and then attached to an adherend, can be cleanly peeled off from the adherend without remaining thereon. In this specification, the removability of the multilayer body is also evaluated after the multilayer body is placed in a promotion environment for a predetermined period, while assuming an environment in which the multilayer body in accordance with an aspect of the present invention is used as a traceability label. The removability of the multilayer body which has been placed in the promotion environment for the predetermined period can be evaluated, for example, by a method described in Examples described later.

Next, a cross-sectional structure of a multilayer body 1 in accordance with an embodiment of the present invention will be described with reference to Fig. 1. Fig. 1 is a diagram schematically illustrating an example of the cross-sectional structure of the multilayer body 1 in accordance with an embodiment of the present invention. As illustrated in Fig. 1, the multilayer body 1 includes a first layer 10, a second layer 20, and a third layer 30, and the first layer 10, the second layer 20, and the third layer 30 are stacked in this order. The second layer 20 is in contact with the first layer 10.

The multilayer body 1 in accordance with an aspect of the present invention has a three-layer structure consisting of the first layer 10, the second layer 20 and the third layer 30, and does not include any other layer between the first layer 10 and the second layer 20. Therefore, as compared with a multilayer body having another layer between the first layer 10 and the second layer 20 as, for example, in the multilayer body disclosed in Patent Literature 1, the multilayer body 1 has an advantage in that a production process can be simplified and a production cost can be reduced. Moreover, the multilayer body 1 includes the third layer 30 having adhesiveness. Therefore, the multilayer body 1 can be attached to an adherend and the multilayer body 1 can be peeled off from the adherend. Thus, the multilayer body 1 can be used as a traceability label which is demanded to achieve both adhesion to an adherend and removability.

The following description will discuss laser marking with respect to the multilayer body 1. First, laser light is emitted on the first layer 10 side of the multilayer body 1. The emitted laser light passes through the first layer 10 and acts on the second layer 20. The second layer 20 is formed of a resin composition containing a color development pigment. Therefore, at a site irradiated with the laser light in the second layer 20, the color development pigment develops a color, and the resin is carbonized by heat of the laser light. The portion of the second layer 20 which has developed the color and has been carbonized becomes a print portion of the laser marking label. The print portion is a region of the second layer 20 that has changed to black. Such a laser marking label of the type in which a color development layer containing a color development pigment is included inside a film and the color development layer is thus caused to develop a color by laser irradiation may be particularly referred to as an internal color development type laser marking label. In this specification, "laser marking" is not limited only to writing semantic information such as characters and codes on the multilayer body 1, and any acts of causing at least a part of the second layer 20 of the multilayer body 1 to develop a color by irradiation with laser light are comprehensively referred to as "laser marking".

The following description will discuss each of layers in the multilayer body 1.

### [First layer 10]

The first layer 10 is a layer that allows laser light to pass through. Note that, in this specification, the first layer 10 is sometimes referred to as "surface layer".

As the first layer 10, an optically transparent film is used. The phrase "optically transparent" means, for example, that transmittance with respect to laser light is not less than 50% and transmittance with respect to visible light is not less than 80%. In a case where the transmittance of the first layer 10 with respect to visible light is sufficiently high, the second layer 20, which is provided below the first layer 10, can be sufficiently visible through the first layer 10 when the multilayer body 1 after laser marking is viewed in a plan view from the first layer 10 side. Transmittance of a base film with respect to laser light and transmittance of the base film with respect to visible light can be measured using, for example, a known spectrophotometer.

As a resin used as a material for the base film as the first layer 10, any of a thermoplastic resin or a thermosetting resin can be used. More specifically, examples of the resin used as a material for the base film as the first layer 10 include a (meth)acrylic-based copolymer, a vinyl butyral resin, a vinyl chloride resin, a fluorine-based resin, a polyester-based resin, a polystyrene resin, and a thermoplastic polyurethane-based resin (TPU). These resins are excellent in transparency, heat resistance, and handleability. These resins can be used alone or in combination of two or more thereof.

Among the resins described above, in particular, a polyester-based resin is suitable for the resin used as the material for the base film, because the polyester-based resin can sufficiently allow laser light to pass through and has good handleability and good heat resistance. In a case where the base film as the first layer 10 is made of a polyester-based resin, it is possible to enhance versatility of the multilayer body 1 and to realize fine laser marking.

From the viewpoint of inhibiting deformation due to heat generated during laser marking, the polyester-based resin is preferably an aromatic ester-based resin. The aromatic ester-based resin is more preferably a transparent resin, from the viewpoint of inhibiting deformation due to heat during laser light irradiation.

Examples of the aromatic ester-based resin include polyethylene terephthalate, polybutylene terephthalate (PBT), polycyclohexylene dimethylene terephthalate, and polyethylene naphthalate (PEN). Among those, from the foregoing viewpoint, the aromatic ester-based resin is more preferably polyethylene terephthalate (PET).

A thickness of the first layer 10 is not particularly limited, but it is more preferable that the thickness is large from the viewpoint of chemical resistance and abrasion resistance. An upper limit of the thickness of the first layer 10 can be appropriately set from the viewpoints of workability and costs. For example, the thickness of the first layer 10 is preferably not less than 10 pm and not more than 200 pm, from the viewpoint of good workability (e.g., handleability) when the multilayer body 1 is attached to an adherend.

The resin used as a material for the base film as the first layer 10 can contain various additives to an extent that does not impair print readability and removability. Examples of such additives include a dispersing agent, a photo stabilizer, a thermal stabilizer, a plasticizer, a filler, and a colorant.

### [Second layer 20]

The second layer 20 develops a color by laser light. Note that, in this specification, the second layer 20 is sometimes referred to as "color development layer 20".

The second layer 20 consists of a resin composition containing an acrylic-based copolymer, an isocyanate-based crosslinking agent, a color development pigment, and a white pigment.

A thickness of the second layer 20 is not particularly limited, and is preferably not less than 15 pm and not more than 70 pm. In a case where the thickness of the second layer 20 is not less than 15 pm, penetration resistance with respect to laser light and printability are improved. In a case where the thickness of the second layer 20 is not more than 70 pm, productivity of the second layer 20 is improved.

### (Acrylic-based copolymer)

In this specification, the "acrylic-based copolymer" is a polymer containing (meth)acrylic acid and a derivative thereof as monomers, and is a copolymer. The term "(meth)acrylic" refers to one or both of acrylic and methacrylic. Moreover, the term "(meth)acrylate" refers to one or both of acrylate and methacrylate. Further, the term "(meth)acrylic monomer" refers to at least any of acrylic acid, a derivative thereof, methacrylic acid, and a derivative thereof.

It is preferable that the acrylic-based copolymer contains, as main monomer components, a (meth)acrylic monomer and a (meth)acrylic monomer having a hydroxyl group. A (meth)acrylic monomer having a carboxyl group can be further used as a monomer component.

Examples of the (meth)acrylic monomer which serves as a main monomer component of the acrylic-based copolymer include methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, n-hexyl (meth)acrylate, 2-ethylhexyl (meth)acrylate, octyl (meth)acrylate, cyclohexyl (meth)acrylate, phenyl (meth)acrylate, benzyl (meth)acrylate, phenoxyethyl (meth)acrylate, isobornyl (meth)acrylate, 2-methoxy (meth)acrylate, 2-ethoxy (meth)acrylate, glycidyl (meth)acrylate, and tetrahydrofurfuryl (meth)acrylate. These acrylic monomer components used can be one type or more.

A contained amount of the (meth)acrylic monomer serving as a main monomer component is preferably within a range of not less than 80% and not more than 99%. It is preferable that the acrylic-based copolymer contains a (meth)acrylic monomer having a hydroxyl group in an amount of not less than 1% and less than 20%. In a case where the (meth)acrylic monomer having a hydroxyl group is contained in an amount of not less than 3% and less than 17%, it is possible to more suitably form a crosslinked structure with an isocyanate group possessed by the isocyanate-based crosslinking agent.

Examples of the (meth)acrylic monomer having a hydroxyl group include 2-hydroxyethyl (meth)acrylate, 2-hydroxypropyl (meth)acrylate, 3-hydroxypropyl (meth)acrylate, 4-hydroxybutyl (meth)acrylate, 3-methyl-3-hydroxybutyl (meth)acrylate, 1,3-dimethyl-3-hydroxybutyl (meth)acrylate, 2,2,4-trimethyl-3-hydroxypentyl (meth)acrylate, 2-ethyl-3-hydroxyhexyl (meth)acrylate, polypropylene glycol mono(meth)acrylate, polyethylene glycol mono(meth)acrylate, poly(ethylene glycol-propylene glycol) mono(meth)acrylate, and pentaerythritol tri(meth)acrylate. The (meth)acrylic monomer having a hydroxyl group used can be one type or more. The acrylic-based copolymer can contain a (meth)acrylic monomer having a carboxyl group.

Examples of the (meth)acrylic monomer having a carboxyl group include (meth)acrylic acid, crotonic acid, maleic anhydride, fumaric acid, itaconic acid, glutaconic acid, and citraconic acid. These monomers used can be one type or more.

The acrylic-based copolymer can contain a copolymerizable monomer to an extent that does not impair the effectiveness of the present invention. Examples of such a monomer include vinyl acetate, vinyl ether, acrylonitrile, styrene, and the like.

A weight-average molecular weight (Mw) of the acrylic-based copolymer is preferably within a range of not less than 5,000 and not more than 1,000,000. In a case where the weight-average molecular weight (Mw) of the acrylic-based copolymer is not less than 5,000, the film is less likely to be brittle. In a case where the weight-average molecular weight (Mw) of the acrylic-based copolymer is not more than 1,000,000, an effect of excellent film-forming ability can be brought about.

It is preferable that a glass transition temperature Tg of the acrylic-based copolymer is not less than 0°C and not more than 100°C. In a case where the glass transition temperature Tg of the acrylic-based copolymer is not less than 0°C, an effect of good film-forming ability as a film can be brought about (i.e., no tuck is generated). In a case where the glass transition temperature Tg of the acrylic-based copolymer is not more than 100°C, effects of good film workability and of being less brittle can be brought about. In a case where a plurality of types of acrylic-based copolymers are mixed and used, it is preferable that the glass transition temperature Tg of an acrylic-based copolymer mixture obtained by the mixing falls within the above range.

A polymerization mode of the acrylic-based copolymer is not particularly limited, and can be random copolymerization, alternating copolymerization, block copolymerization, or graft copolymerization.

Specific examples of the acrylic-based copolymer include KP-1876E (product name: Nissetsu (registered trademark), available from NIPPON CARBIDE INDUSTRIES CO., INC.), H-4002 (available from Negami Chemical Industrial Co., Ltd.), and the like, which are commercially available products of the acrylic-based copolymer used in Examples described later.

### (Isocyanate-based crosslinking agent)

The isocyanate-based crosslinking agent is selected from (i) an aromatic-aliphatic isocyanate-based crosslinking agent or (ii) a mixture of an aliphatic or alicyclic isocyanate-based crosslinking agent and an aromatic isocyanate-based crosslinking agent.

The isocyanate-based crosslinking agent is preferably an aromatic-aliphatic isocyanate-based crosslinking agent, and the aromatic-aliphatic isocyanate-based crosslinking agent is more preferably a xylenediisocyanate (XDI)-based crosslinking agent.

By selecting the aromatic-aliphatic isocyanate-based crosslinking agent as the isocyanate-based crosslinking agent, it is possible to impart good print readability and good removability to the multilayer body in accordance with an aspect of the present invention.

### (i) Aromatic-aliphatic isocyanate-based crosslinking agent

In this specification, the term "aromatic-aliphatic isocyanate-based crosslinking agent" is intended to refer to a crosslinking agent derived from an aromatic-aliphatic isocyanate compound. Examples of the crosslinking agent derived from an aromatic-aliphatic isocyanate compound include, in addition to a monomer of an aromatic-aliphatic isocyanate compound, a dimer or trimer of an aromatic-aliphatic isocyanate compound, i.e., uretdione or isocyanurate; a prepolymer of an aromatic-aliphatic isocyanate compound and a polyol resin; an adduct of (a) an aromatic-aliphatic isocyanate compound and (b) a polyhydric alcohol compound (such as propylene glycol (bifunctional alcohol), butylene glycol (bifunctional alcohol), trimethylol propane (TMP, trifunctional alcohol), glycerin (trifunctional alcohol), and pentaerythritol (tetrafunctional alcohol)), a urea compound, and the like; a biuret of an aromatic-aliphatic isocyanate compound; and the like.

The "aromatic-aliphatic isocyanate compound" is intended to be a compound having a structure in which an isocyanate group and an aromatic ring are coupled to each other via an alkylene group in a molecule. Such an aromatic-aliphatic isocyanate compound can be, for example, a compound having a structure in which an isocyanate group and an aromatic ring are coupled to each other via a methylene group in a molecule. Examples of the aromatic-aliphatic isocyanate compound having a structure in which an isocyanate group and an aromatic ring are coupled to each other via a methylene group in a molecule include o-xylenediisocyanate (XDI), m-xylenediisocyanate (XDI), p-xylenediisocyanate (XDI), and the like.

Examples of commercially available products of the aromatic-aliphatic isocyanate-based crosslinking agent include Takenate (registered trademark) D-131N (available from Mitsui Chemicals, Inc.), Takenate (registered trademark) D-110N (available from Mitsui Chemicals, Inc.), and the like.

As described above, the XDI-based crosslinking agent is aromatic-aliphatic isocyanate in which an isocyanate group and an aromatic ring are coupled to each other via a methylene group. Thus, the XDI-based crosslinking agent has properties of both aromatic isocyanate and aliphatic or alicyclic isocyanate. From these properties, by using the XDI-based crosslinking agent, it is possible to strengthen the bond between the resins, and to improve adherence between the first layer 10 which is the surface layer and the second layer 20 which is the color development layer (these are characteristics of the aromatic isocyanate), and embrittlement of the resin film hardly occurs (this is a characteristic of the aliphatic or alicyclic isocyanate). As a result, it is possible to increase toughness of the resin and to improve removability by using the XDI-based crosslinking agent, as compared with a case where only an ordinary aromatic isocyanate compound represented by a tolylene diisocyanate (TDI)-based crosslinking agent is used as a crosslinking agent. Moreover, the XDI-based crosslinking agent has an aromatic ring, and therefore carbonization of the resin is apt to occur by heat during laser light irradiation. As a result, laser marking property is improved by using the XDI-based crosslinking agent, as compared with a case where only an ordinary aliphatic or alicyclic isocyanate compound represented by a hexamethylene diisocyanate (HDI)-based crosslinking agent is used as a crosslinking agent.

A contained amount of the aromatic-aliphatic isocyanate-based crosslinking agent in the resin composition used for the second layer 20 is preferably not less than 5 parts by mass and not more than 40 parts by mass with respect to 100 parts by mass of the acrylic-based copolymer. In a case where the contained amount of the aromatic-aliphatic isocyanate-based crosslinking agent in the resin composition used for the second layer 20 is not less than 5 parts by mass with respect to 100 parts by mass of the acrylic-based copolymer, good adherence is achieved between the first layer 10 which is the surface layer and the second layer 20 which is the color development layer. In a case where the contained amount of the aromatic-aliphatic isocyanate-based crosslinking agent in the resin composition used for the second layer 20 is not more than 40 parts by mass with respect to 100 parts by mass of the acrylic-based copolymer, it is possible to inhibit embrittlement of the second layer 20 which is the color development layer. This makes it possible to inhibit generation of dust in the second layer 20 during laser marking and to improve adherence between the first layer 10 and the second layer 20 and toughness of the second layer 20, without providing an intermediate layer between the first layer 10 and the second layer 20.

The aromatic-aliphatic isocyanate-based crosslinking agent can be used alone or two or more types thereof can be used in combination. Another crosslinking agent can be contained to an extent that does not impair an effect of the aromatic-aliphatic isocyanate-based crosslinking agent. Examples of said another crosslinking agent include a melamine-based crosslinking agent, a benzoguanamine-based crosslinking agent, a urea-based crosslinking agent, a metal chelate-based crosslinking agent, an organosilane-based crosslinking agent, an epoxy-based crosslinking agent, an acid anhydride-based crosslinking agent, and the like.

### (ii) Mixture of aliphatic or alicyclic isocyanate-based crosslinking agent and aromatic isocyanate-based crosslinking agent

In the multilayer body in accordance with an aspect of the present invention, a mixture of an aliphatic or alicyclic isocyanate-based crosslinking agent and an aromatic isocyanate-based crosslinking agent can be contained, instead of the aromatic-aliphatic isocyanate-based crosslinking agent, to an extent of bringing about an effect equivalent to that of the aromatic-aliphatic isocyanate-based crosslinking agent. By using the mixture of an aliphatic or alicyclic isocyanate-based crosslinking agent and an aromatic isocyanate-based crosslinking agent, as with the aromatic-aliphatic isocyanate-based crosslinking agent, it is possible to strengthen the bond between the resins, and to improve adherence between the first layer 10 which is the surface layer and the second layer 20 which is the color development layer (these are characteristics of the aromatic isocyanate), and embrittlement of the resin film hardly occurs (this is a characteristic of the aliphatic or alicyclic isocyanate).

In this specification, the term "aliphatic or alicyclic isocyanate-based crosslinking agent" is intended to refer to a crosslinking agent derived from an aliphatic or alicyclic isocyanate compound. Examples of the crosslinking agent derived from an aliphatic or alicyclic isocyanate compound include, in addition to a monomer of an aliphatic or alicyclic isocyanate compound, a dimer or trimer of an aliphatic or alicyclic isocyanate compound, i.e., uretdione or isocyanurate; a prepolymer of an aliphatic or alicyclic isocyanate compound and a polyol resin; an adduct of (a) an aliphatic or alicyclic isocyanate compound and (b) a polyhydric alcohol compound (such as propylene glycol (bifunctional alcohol), butylene glycol (bifunctional alcohol), trimethylol propane (TMP, trifunctional alcohol), glycerin (trifunctional alcohol), and pentaerythritol (tetrafunctional alcohol)), a urea compound, and the like; a biuret of an aliphatic or alicyclic isocyanate compound; and the like.

In the "aliphatic or alicyclic isocyanate compound", it is only necessary that an isocyanate group is coupled to an aliphatic compound having approximately 1 to 1000 carbon atoms. Examples of such an aliphatic or alicyclic isocyanate compound include aliphatic or alicyclic isocyanate compounds such as hexamethylene diisocyanate (HDI), heptamethylene diisocyanate, isophorone diisocyanate (IPDI), hydrogenated xylylene diisocyanate (hydrogenated XDI), and hydrogenated diphenylmethane diisocyanate (hydrogenated MDI). Examples of the hydrogenated xylylene diisocyanate include 1,4-cyclohexanebismethylisocyanate, and the like. Examples of the hydrogenated diphenylmethane diisocyanate include 4,4-methylenebiscyclohexylisocyanate, and the like.

Examples of commercially available products of the aliphatic or alicyclic isocyanate-based crosslinking agent include Coronate (registered trademark) HK (available from Tosoh Corporation), Coronate (registered trademark) HX (available from Tosoh Corporation), Desmodur (registered trademark) N3300 (available from Sumika Covestro Urethane Co., Ltd.), and the like.

In this specification, the term "aromatic isocyanate-based crosslinking agent" is intended to refer to a crosslinking agent derived from an aromatic isocyanate compound. Examples of the crosslinking agent derived from an aromatic isocyanate compound include, in addition to a monomer of an aromatic isocyanate compound, a dimer or trimer of an aromatic isocyanate compound, i.e., uretdione or isocyanurate; a prepolymer of an aromatic isocyanate compound and a polyol resin; an adduct of (a) an aromatic isocyanate compound and (b) a polyhydric alcohol compound (such as propylene glycol (bifunctional alcohol), butylene glycol (bifunctional alcohol), trimethylol propane (TMP, trifunctional alcohol), glycerin (trifunctional alcohol), and pentaerythritol (tetrafunctional alcohol)), a urea compound, and the like; a biuret of an aromatic isocyanate compound; and the like.

In the "aromatic isocyanate compound", it is only necessary that an isocyanate group is coupled to an aromatic compound having approximately 1 to 1000 carbon atoms. Examples of such an aromatic isocyanate compound include polymeric MDI such as diphenylmethane diisocyanate (MDI) and triphenylmethane triisocyanate, and an aromatic isocyanate compound such as tolylene diisocyanate (TDI).

Examples of commercially available products of the aromatic isocyanate-based crosslinking agent include Coronate (registered trademark) L45E (available from Tosoh Corporation), Takenate (registered trademark) D-204 (available from Mitsui Chemicals, Inc.), and the like.

In a case where the mixture of an aliphatic or alicyclic isocyanate-based crosslinking agent and an aromatic isocyanate-based crosslinking agent is used, a mixing ratio thereof is preferably set within a range that brings about an effect equivalent to that of the aromatic-aliphatic isocyanate-based crosslinking agent. For example, a weight ratio of the aliphatic or alicyclic isocyanate-based crosslinking agent to the aromatic isocyanate-based crosslinking agent is 0.1 to 10, and is preferably 0.5 to 2. In a case where the weight ratio of the aliphatic or alicyclic isocyanate-based crosslinking agent to the aromatic isocyanate-based crosslinking agent is within the above range, properties of both the aromatic isocyanate and the aliphatic or alicyclic isocyanate can be exhibited with a good balance.

In a case where the mixture of an aliphatic or alicyclic isocyanate-based crosslinking agent and an aromatic isocyanate-based crosslinking agent is used, a contained amount of the mixture of an aliphatic or alicyclic isocyanate-based crosslinking agent and an aromatic isocyanate-based crosslinking agent is preferably not less than 5 parts by mass and not more than 40 parts by mass with respect to 100 parts by mass of the acrylic-based copolymer, as with the case where the aromatic-aliphatic isocyanate-based crosslinking agent is used. In a case where the contained amount of the mixture of an aliphatic or alicyclic isocyanate-based crosslinking agent and an aromatic isocyanate-based crosslinking agent is not less than 5 parts by mass with respect to 100 parts by mass of the acrylic-based copolymer, good adherence is achieved between the first layer 10 which is the surface layer and the second layer 20 which is the color development layer. In a case where the contained amount of the mixture of an aliphatic or alicyclic isocyanate-based crosslinking agent and an aromatic isocyanate-based crosslinking agent is not more than 40 parts by mass with respect to 100 parts by mass of the acrylic-based copolymer, it is possible to inhibit embrittlement of the second layer 20 which is a color development layer.

In the mixture of an aliphatic or alicyclic isocyanate-based crosslinking agent and an aromatic isocyanate-based crosslinking agent, each of the aliphatic or alicyclic isocyanate-based crosslinking agent and the aromatic isocyanate-based crosslinking agent can be mixed as one type thereof, or a plurality of types thereof can be used in combination. Another crosslinking agent can be contained to an extent that does not impair the effect of the mixture of an aliphatic or alicyclic isocyanate-based crosslinking agent and an aromatic isocyanate-based crosslinking agent. Examples of said another crosslinking agent include a melamine-based crosslinking agent, a benzoguanamine-based crosslinking agent, a urea-based crosslinking agent, a metal chelate-based crosslinking agent, an organosilane-based crosslinking agent, an epoxy-based crosslinking agent, an acid anhydride-based crosslinking agent, and the like.

### (Color development pigment)

As the color development pigment, for example, a bismuth compound, a copper compound, a molybdenum compound, an iron compound, a nickel compound, a chromium compound, a zirconium compound, a neodymium compound, an antimony compound, a titanium compound, mica, and a tin compound can be used. Among those, it is preferable to use, as the color development pigment, one or more selected from the group consisting of a bismuth compound, a copper compound, a molybdenum compound, and an antimony compound. These color development pigments are excellent in color development during laser marking, and it is therefore possible to set output of a laser during laser marking to be lower than a conventional case. As a result, dust generation during laser marking is inhibited, blistering due to dust generation does not occur between the first layer 10 and the second layer 20, and readability of the laser marking portion becomes better. These color development pigments can be used alone or in combination of two or more thereof.

In particular, it is more preferable that the bismuth compound is bismuth(III) oxide (BiaOs) because of excellent blackness at the time of color development by laser marking.

A contained amount of the color development pigment in the resin composition used for the second layer 20 is preferably not less than 0.2% by mass and not more than 4.0% by mass with respect to 100% by mass of the resin composition used for the second layer 20. In a case where the contained amount of the color development pigment is not less than 0.2% by mass with respect to 100% by mass of the resin composition used for the second layer 20, a sufficient amount of the color development pigment is contained. Therefore, color development is appropriately achieved during laser marking, and readability of the laser marking portion becomes good.

In a case where the contained amount of the color development pigment is not more than 4.0% by mass with respect to 100% by mass of the resin composition used for the second layer 20, dust generation during laser marking can be inhibited. Therefore, blistering due to dust generation does not occur between the first layer 10 and the second layer 20. As a result, an appearance of the multilayer body 1 after laser marking becomes good, and readability of the laser marking portion becomes good.

### (White pigment)

As the white pigment, various inorganic pigments can be used. Examples of the white pigment include titanium oxide (TiO₂), zinc oxide, basic lead sulfate, zinc sulfide, antimony oxide, and the like. Alternatively, the white pigment can be barium sulfate, barium carbonate, precipitable calcium carbonate, diatomaceous earth, talc, clay, basic magnesium carbonate, alumina white, and the like. Among those, as the white pigment, titanium oxide (TiOa) is preferable. The titanium oxide (TiO₂) is excellent in whiteness. Therefore, a contrast between a black color of a print portion and a white color of a non-print portion can be increased, and as a result, readability of the print portion becomes good.

A contained amount of the white pigment in the resin composition used for the second layer 20 is preferably determined based on a contained amount of the color development pigment. Specifically, a weight ratio of the white pigment to the color development pigment is preferably not less than 3 and not more than 35. In a case where the weight ratio of the white pigment to the color development pigment is not less than 3, a contrast between a black color of a print portion and a white color of a non-print portion can be increased, and readability of the print portion becomes good. In a case where the weight ratio of the white pigment to the color development pigment is not more than 35, it is possible to prevent a decrease in color development property of the color development pigment.

### (Others)

The resin composition used for the second layer 20 can contain various additives to an extent that does not impair print readability and removability. Examples of such additives include a dispersing agent, a photo stabilizer, a thermal stabilizer, a plasticizer, a tackifier, a filler, and a colorant.

In the resin composition used for the second layer 20, it is preferable that the white pigment is a white pigment dispersed with a plasticizer. Thus, dispersibility of the white pigment in the resin composition used for the second layer 20 becomes good. Examples of the plasticizer include a polyether glycol-based plasticizer and a polyester-based plasticizer.

The resin composition used for the second layer 20 preferably contains a leveling agent. Thus, in production of the multilayer body 1, when the second layer 20 is formed by coating the first layer 10 with the resin composition used for the second layer 20, coatability of the resin composition used for the second layer 20 becomes good. Examples of the leveling agent include an acrylic-based leveling agent.

### [Third layer 30]

The third layer 30 has adhesiveness. Note that, in this specification, the third layer 30 is sometimes referred to as "adhesive layer 30".

An adhesive agent used in the third layer 30 only needs to be adhered to an adherend such as a resin plate, a metal plate, and a glass plate, and peeled off from the adherend. Specifically, the adhesive agent used in the third layer 30 has adhesive force of not less than 0.1 N/25 mm and not more than 40 N/25 mm, preferably not less than 0.3 N/25 mm and not more than 30/25 mm. In a case where the adhesive force of the adhesive agent is not less than 0.1 N/25 mm, adherence to an adherend is obtained. In a case where the adhesive force of the adhesive agent is not more than 40 N/25 mm, releasability of the adhesive agent becomes good. Note that the adhesive force of the adhesive agent described above refers to a value measured by a method described in Examples described later.

The third layer 30 consists of a resin composition. Examples of the resin composition used for the third layer 30 include a (meth)acrylic-based adhesive agent, a silicone-based adhesive agent, a synthetic rubber-based adhesive agent, and the like. From the viewpoint of enhancing adherence between the second layer 20 and the third layer 30, it is more preferable to use a (meth)acrylic-based adhesive agent.

A thickness of the third layer 30 is not particularly limited, and is preferably in a range of not less than 5 pm and not more than 100 pm. In a case where the thickness of the third layer 30 is within the above range, workability (e.g., handleability) becomes good when the multilayer body 1 is attached to an adherend.

The resin composition used for the third layer 30 can contain various additives to an extent that does not impair print readability and removability. Examples of such additives include a dispersing agent, a photo stabilizer, a thermal stabilizer, a plasticizer, a tackifier, a filler, and a colorant.

It is also possible to form the third layer 30 as a double-sided tape including a core material between adhesive agents, by coating both surfaces of the core material with the resin composition used for the third layer 30.

### [Laser marking method with respect to multilayer body 1]

Laser marking with respect to the multilayer body 1 can be carried out by irradiating the multilayer body 1 with laser light from the first layer 10 side.

Examples of a laser used for the laser marking include near-infrared lasers having a wavelength of approximately 1000 nm; a YVO₄ laser, a YAG laser, and a fiber laser.

Laser marking with respect to the multilayer body 1 is typically carried out prior to attaching the multilayer body 1 to an adherend. Laser marking can also be carried out after the multilayer body 1 has been attached to an adherend. However, in this case, it is preferable that the multilayer body 1 has enough penetration resistance so that the adherend to which the multilayer body 1 is attached is not damaged by laser irradiation.

### [Method for producing multilayer body 1]

The multilayer body 1 in accordance with an aspect of the present invention can be produced by arranging and forming the first layer 10, the second layer 20, and the third layer 30 so as to be stacked in this order. For example, the multilayer body 1 can be produced by a production method including at least a second layer forming step of forming the second layer 20 on one surface of the first layer 10, and a third layer forming step of forming the third layer 30 on a surface of the second layer 20 on a side not in contact with the first layer 10 after the second layer forming step.

The second layer forming step can be a step of coating one surface of a base film as the first layer 10 with the resin composition used for the second layer 20, and curing the resin composition to form the second layer 20. The resin composition used for the second layer 20 is as described in the section "Second layer 20" above. In the method for producing the multilayer body 1, a method of applying the resin composition used for the second layer 20 is not particularly limited, and the resin composition can be applied by a known coating method. Examples of such a coating method include screen printing, gravure printing, bar coating, knife coating, roller coating, comma coating, blade coating, die coating, spray coating, and the like.

In regard to the method of curing the resin composition used for the second layer 20, the curing can be carried out by a known method corresponding to types of a resin, a crosslinking agent, and/or the like contained in the resin composition used for the second layer 20. Examples of such a curing method include drying by hot air, heating by a heating device such as an oven or a hot plate, and the like.

The third layer forming step can be a step of coating a surface of the second layer 20 on a side not in contact with the first layer 10 after the second layer forming step with the resin composition used for the third layer 30, and curing the resin composition to form the third layer 30. In another embodiment, the third layer forming step can be a step of applying and curing the resin composition used for the third layer 30 to form the third layer 30, and then attaching the third layer 30 to a surface of the second layer 20 on a side not in contact with the first layer 10 after the second layer forming step. The resin composition used for the third layer 30 is as described in the section "Third layer 30" above. In the method for producing the multilayer body 1, a method of applying the resin composition used for the third layer 30 and a method of curing the resin composition used for the third layer 30 can also be carried out by known coating method and curing method as described above.

In the method for producing the multilayer body 1, if necessary, a first layer forming step of forming the first layer 10 can be further included prior to the second layer forming step.

Aspects of the present invention can also be expressed as follows:
The multilayer body in accordance with an aspect 1 of the present invention is a multilayer body for use in a laser marking label, and the multilayer body is configured to include: a first layer that allows laser light to pass through; a second layer that develops a color with the laser light; and a third layer that has adhesiveness, the first layer, the second layer, and the third layer being stacked in this order, the second layer consisting of a resin composition containing an acrylic-based copolymer, an isocyanate-based crosslinking agent, a color development pigment, and a white pigment, the isocyanate-based crosslinking agent being selected from (i) an aromatic-aliphatic isocyanate-based crosslinking agent or (ii) a mixture of an aliphatic or alicyclic isocyanate-based crosslinking agent and an aromatic isocyanate-based crosslinking agent, a contained amount of the isocyanate-based crosslinking agent being not less than 5 parts by mass and not more than 40 parts by mass with respect to 100 parts by mass of the acrylic-based copolymer, and the second layer being in contact with the first layer.

According to the configuration, generation of dust in the second layer during laser marking is inhibited, and adherence between the first layer and the second layer and toughness of the second layer are improved as compared with a conventional laser marking label. It is therefore possible to obtain a multilayer body having good print readability and good removability.

In the multilayer body in accordance with an aspect 2 of the present invention, it is possible in the aspect 1 that: the color development pigment is one or more selected from the group consisting of bismuth oxide, a copper compound, a molybdenum compound, and an antimony compound.

According to the configuration, color development during laser marking is excellent, and it is therefore possible to set output of a laser during laser marking to be lower than a conventional case. As a result, dust generation during laser marking is inhibited, blistering due to dust generation does not occur between the first layer and the second layer, and readability of the laser marking portion becomes better.

In the multilayer body in accordance with an aspect 3 of the present invention, it is possible in the aspect 1 or 2 that: a contained amount of the color development pigment is not less than 0.2% by mass and not more than 4.0% by mass with respect to 100% by mass of the resin composition.

According to the configuration, the laser marking portion properly develops a color during laser marking, and readability of the laser marking portion becomes good. Moreover, dust generation during laser marking can be inhibited, and therefore blistering due to dust generation does not occur between the first layer and the second layer. As a result, an appearance of the multilayer body after laser marking becomes good, and readability of the laser marking portion becomes good.

In the multilayer body in accordance with an aspect 4 of the present invention, it is possible in any of the aspects 1 through 3 that: a thickness of the second layer is not less than 15 pm and not more than 70 pm.

According to the configuration, penetration resistance of the second layer with respect to laser light and printability are improved, and manufacturability is improved.

In the multilayer body in accordance with an aspect 5 of the present invention, it is possible in any of the aspects 1 through 4 that: a weight ratio of the white pigment to the color development pigment is not less than 3 and not more than 35.

According to the above configuration, a contrast between a black color of a print portion and a white color of a non-print portion can be increased, and readability of the print portion becomes good. Further, it is possible to prevent deterioration of color development property of the color development pigment.

In the multilayer body in accordance with an aspect 6 of the present invention, it is possible in the aspect 1 that: the isocyanate-based crosslinking agent is an aromatic-aliphatic isocyanate-based crosslinking agent.

According to the configuration, adherence between the first layer and the second layer and toughness of the second layer can be improved, and laser marking property can be improved.

In the multilayer body in accordance with an aspect 7 of the present invention, it is possible in the aspect 6 that: the aromatic-aliphatic isocyanate-based crosslinking agent is a xylenediisocyanate-based crosslinking agent.

According to the configuration, adherence between the first layer and the second layer and toughness of the second layer can be improved, and laser marking property can be improved.

The present invention is not limited to the embodiments, but can be altered by a skilled person in the art within the scope of the claims. The present invention also encompasses, in its technical scope, any embodiment derived by combining technical means disclosed in differing embodiments.

### Examples

The following description will discuss the present invention in further detail with reference to Examples. Note, however, that the present invention is not limited to those Examples.

### [Preparation of resin composition for color development layer]

In order to form a color development layer (corresponding to the second layer) in each of multilayer bodies of Examples 1 through 3 and Comparative Examples 1 through 5, the following components were mixed in amounts indicated in Table 1 to prepare a resin composition for a color development layer. Note that the number of parts by mass of each of the components in Table 1 represents the number of parts by mass on a solid content basis of that component contained in the resin composition for a color development layer.

### (Base agent)

The following two types of acrylic-based copolymers were mixed so that KP-1876E/H4002 becomes 50.4 parts by mass/49.6 parts by mass on a solid content basis (i.e., a total of 100 parts by mass).

- An acrylic-based copolymer, product name: Nissetsu (registered trademark) KP-1876E (available from NIPPON CARBIDE INDUSTRIES CO., INC., solid content 50.0%, MMA/EA/2HEMA = 21/65/14, Tg = 1°C, MW 120,000)
- An acrylic-based copolymer, product name: H-4002 (available from Negami Chemical Industrial Co., Ltd., solid content 54.5%, MMA/nBMA/BA/2HEMA/AA = 40/33.5/13.5/13/0.5, Tg = 44°C, MW 10,000)

The Tg of the acrylic-based copolymer mixture was 19.6°C.

### (Crosslinking agent)

- An XDI-based crosslinking agent, product name: Takenate (registered trademark) D-131N (available from Mitsui Chemicals, Inc., solid content 75.0%, NCO% = 14.0%)
- A TDI-based crosslinking agent, product name: Coronate (registered trademark) L45E (available from Tosoh Corporation, solid content 45%, NCO% = 7.9%)
- An HDI-based crosslinking agent, product name: Coronate (registered trademark) HK (available from Tosoh Corporation, solid content 100%, NCO% = 20%)
- A melamine-based crosslinking agent, product name: MS-11 (available from NIPPON CARBIDE INDUSTRIES CO., INC., solid content 60.0%)

### (Color development pigment)

- A bismuth oxide-based pigment, product name: TOMATEC 42-970A (available from Tokan Material Technology Co., Ltd., solid content 100%)

### (White pigment)

- A titanium oxide based pigment, product name: NX-501 (available from Dainichiseika Color 8v Chemicals Mfg. Co., Ltd., solid content 79.0%)

### (Plasticizer)

- A polyether glycol-based plasticizer, product name: PTMG-1000 (available from Sanyo Chemical Industrial Co., Ltd., solid content 100%)

### (Leveling agent)

- An acrylic-based leveling agent, product name: POLYFLOW No. 85HF (available from Kyoeisha Chemical Co., Ltd., solid content 70.0%)

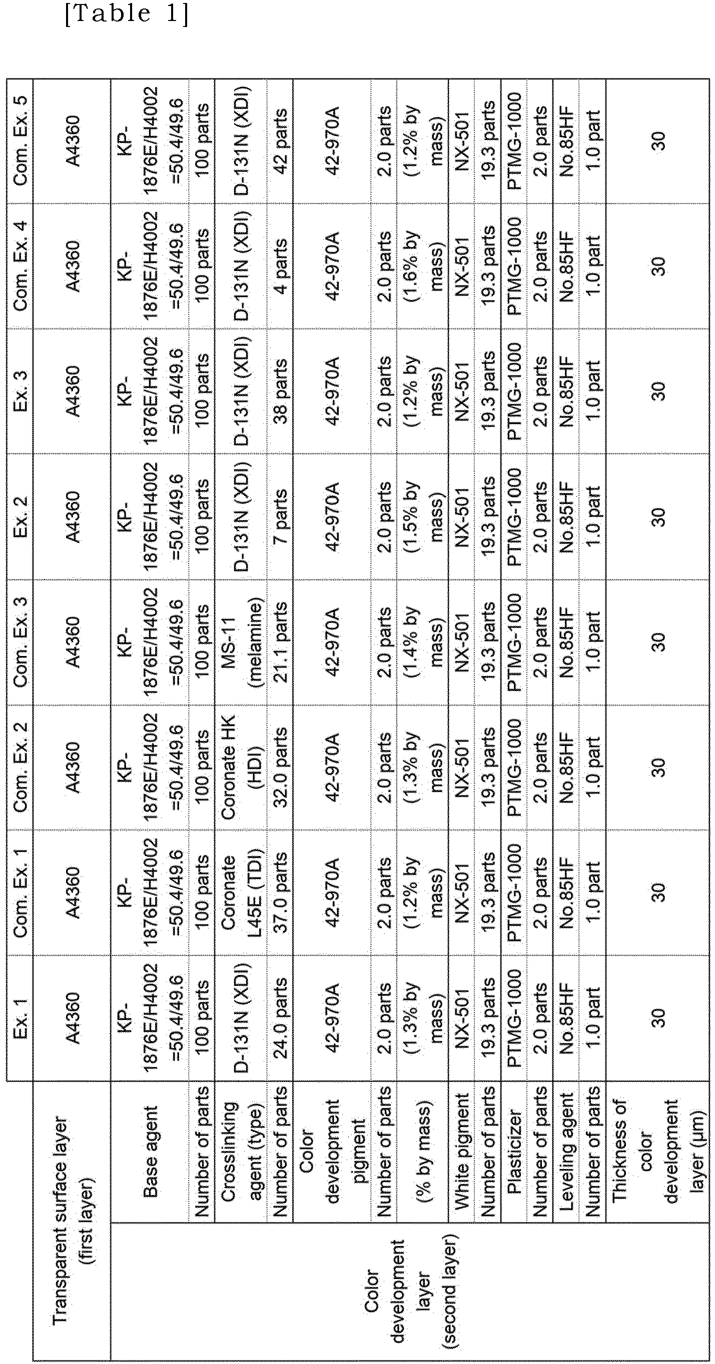

The contained amount (% by mass) of the color development pigment in each of the resin compositions for a color development layer with respect to 100% by mass of that resin composition for a color development layer is as shown in Table 1.

### [Preparation of resin composition for adhesive layer]

In order to form an adhesive layer corresponding to the third layer in the multilayer body in accordance with an aspect of the present invention, the following components were mixed in the following amounts to prepare a resin composition for an adhesive layer.

- An acrylic-based copolymer, product name: Nissetsu (registered trademark) KP-1405 (available from NIPPON CARBIDE INDUSTRIES CO., INC., solid content 40.0%), 100 parts by mass (100 parts by mass on a solid content basis)
- A white pigment, product name: NX-501 (available from Dainichiseika Color 8v Chemicals Mfg. Co., Ltd., solid content 79.0%), 7.6 parts by mass (15.0 parts by mass on a solid content basis)
- An HDI-based crosslinking agent, product name: Sumidur (registered trademark) N-75 (available from Sumika Covestro Urethane Co., Ltd., solid content 75.0%), 0.5 parts by mass (0.93 parts by mass on a solid content basis)

### [Example 1]

A multilayer body of Example 1 was prepared. As a transparent surface layer corresponding to the first layer, a PET film "A4360" (available from Toyobo Co., Ltd.) having a thickness of 50 pm was used. The transparent surface layer used in Example 1 had a transmittance of 89% at 1000 nm, which is a visible light region and is a laser light wavelength region. The transmittance of the laser light was measured, as spectral transmittance, using a spectrophotometer U-4100 available from Hitachi High-Tech Science Corporation at a scanning speed of 300 nm/min and with a slit of 4.0 nm.

A color development layer having a thickness of 30 pm was obtained by coating the transparent surface layer with the resin composition for a color development layer, which had been prepared in the section of "Preparation of resin composition for color development layer", and then heating and drying the resin composition at 145°C for 3 minutes. A resultant color development layer was white in color.

Next, an adhesive layer having a thickness of 30 pm was obtained by coating a polyethylene-coated release paper (SLK110W#6000, available from Sumika-Kakoushi Co., Ltd.) with the resin composition for an adhesive layer, which had been prepared in the section of "Preparation of resin composition for adhesive layer", and then heating and drying the resin composition at 90°C for 3 minutes. An adhesive surface of this adhesive layer is bonded to the color development layer to form a multilayer body for laser marking in Example 1 (hereinafter, simply referred to as "multilayer body"). Adhesive force of the adhesive layer was 1.5 N/10 mm. The adhesive force of the adhesive layer was measured by attaching the multilayer body having a width of 10 mm to an aluminum plate under a load of 2 kg, leaving the plate at 23°C for 24 hours, and then peeling the multilayer body from the aluminum plate at a peeling angle of 180°, at a peeling rate of 300 mm/min, and at a measurement temperature of 23°C.

### [Examples 2-3 and Comparative Examples 1-5]

In order to prepare color development layers for multilayer bodies of Examples 2 and 3 and Comparative Examples 1 through 5, resin compositions for color development layers of Examples 2 and 3 and Comparative Examples 1 through 5 indicated in Table 1 were used. Except for these, multilayer bodies of Examples 2 and 3 and Comparative Examples 1 through 5 were obtained in a manner similar to that of Example 1.

### <Evaluation of print readability and removability>

Print readability and removability of each of the multilayer bodies in Examples 1 through 3 and Comparative Examples 1 through 5 were evaluated.

### (1) Method of evaluating print readability

Laser marking was carried out on the multilayer bodies of respective Examples and Comparative Examples under the following conditions. After printing, each of the multilayer bodies was attached to an aluminum plate to prepare each test piece. After that, each of the test pieces was placed in an environment at 85°C and 85% humidity for 96 hours, and then a readability test was carried out under the following conditions. Note that the promotion environment at 85°C and 85% humidity was set on the assumption of an environment of transportation by sea where a traceability label is to be used.

### (Laser marking conditions)

For each of the test pieces, a two-dimensional bar code having a pattern of QR code (registered trademark), model 2, type 4 (33×33 cells) was laser-marked in a 10 mm square using an FAYb laser (available from Panasonic Industrial Devices SUNX Co., Ltd., product name: Laser Marker LP-Z130) at a wavelength of 1064 nm.

Laser power: 7.5
Scanning speed: 1500 mm/s
Print pulse cycle: 20.0 ps
Line width: 0.070 mm

### (Readability test conditions)

A two-dimensional bar code reader (available from Keyence Corporation, product name: SR-600) was used to read a marking portion of each of the test pieces 10 times to determine print readability.

The test results are expressed as "acceptable" or "unacceptable" in Table 2. Evaluation criteria for the test result of "acceptable" or "unacceptable" are as follows.

Acceptable: Readable all 10 times
Unacceptable: Unreadable at least one time

A multilayer body with the test result of "acceptable" was regarded as an acceptable product.

### (2) Method of evaluating removability

Laser marking was carried out on the multilayer bodies of respective Examples and Comparative Examples under the following conditions. After printing, each of the multilayer bodies was attached to an aluminum plate to prepare each test piece. After that, each of the test pieces was placed in an environment at 85°C and 85% humidity for 96 hours, and then a removability test was carried out under the following conditions.

### (Laser marking conditions)

For each of the test pieces, a 15 mm square fill pattern was laser-marked using an FAYb laser (available from Panasonic Industrial Devices SUNX Co., Ltd., product name: Laser Marker LP-Z130), which is a short wavelength laser, at a wavelength of 1064 nm. Laser marking conditions were identical with those described in the section "(1) Method of evaluating print readability".

### (Removability test conditions)

A corner of each of the test pieces after laser marking was pinched with tweezers, and peeled at a peeling angle of approximately 120° in a peeling time within 1 second.

The test results are expressed as "acceptable" or "unacceptable" in Table 2. Evaluation criteria for the test result of "acceptable" or "unacceptable" are as follows.

Acceptable: Nothing remained on the aluminum plate, and peeling was cleanly achieved.

Unacceptable: The base film remained on the aluminum plate even in a small amount.

A multilayer body with the test result of "acceptable" was regarded as an acceptable product.

| | | Ex. 1 | Com. Ex. 1 | Com. Ex. 2 | Com. Ex. 3 | Ex. 2 | Ex. 3 | Com. Ex. 4 | Com. Ex. 5 |
|---|---|---|---|---|---|---|---|---|---|
| Print readability | 85°C, 85%, 96h | Acceptable | Acceptable | Unacceptable | Acceptable | Acceptable | Acceptable | Acceptable | Acceptable |
| Removability | 85°C, 85%, 96h | Acceptable | Unacceptable (base material broken) | Acceptable | Unacceptable (delamination) | Acceptable | Acceptable | Unacceptable (delamination) | Unacceptable (base material broken) |

### < Results>

The multilayer bodies of Examples 1 through 3 were excellent in print readability and in removability even after being placed in the promotion environment.

In contrast, the multilayer body of Comparative Example 2 was deteriorated in print readability. Specifically, color development of printing deteriorated after being placed in the promotion environment, and the printing became paler. This seemed to be because the pigment reduced by laser light might have been oxidized by the promotion environment.

The multilayer bodies of Comparative Examples 3 and 4 peeled off between the transparent surface layer and the color development layer at the time of peeling. This seemed to be because those multilayer bodies had poor interlayer adherence between the transparent surface layer and the color development layer, and therefore the interface became weaker by the promotion environment, and delamination occurred particularly at a portion where the resin was carbonized by the laser marking.

In the multilayer bodies of Comparative Example 1 and Comparative Example 5, the color development layer was broken together with the transparent surface layer at the time of peeling.

From the above results, it was found that, by containing a predetermined amount of the XDI-based crosslinking agent in the resin composition for a color development layer, the obtained multilayer body has good print readability and good removability.

### Industrial Applicability

The present invention can be suitably utilized as a traceability label.

### Reference Signs List

1: Multilayer body
10: First layer (surface layer)
20: Second layer (color development layer)
30: Third layer (adhesive layer)

## Claims

1. A multilayer body for use in a laser marking label, said multilayer body comprising:
a first layer that allows laser light to pass through;
a second layer that develops a color with the laser light; and
a third layer that has adhesiveness,
the first layer, the second layer, and the third layer being stacked in this order,
the second layer consisting of a resin composition containing an acrylic-based copolymer, an isocyanate-based crosslinking agent, a color development pigment, and a white pigment,
the isocyanate-based crosslinking agent being selected from (i) an aromatic-aliphatic isocyanate-based crosslinking agent or (ii) a mixture of an aliphatic or alicyclic isocyanate-based crosslinking agent and an aromatic isocyanate-based crosslinking agent,
a contained amount of the isocyanate-based crosslinking agent being not less than 5 parts by mass and not more than 40 parts by mass with respect to 100 parts by mass of the acrylic-based copolymer, and
the second layer being in contact with the first layer.

2. The multilayer body as set forth in claim 1, wherein:
the color development pigment is one or more selected from the group consisting of bismuth oxide, a copper compound, a molybdenum compound, and an antimony compound.

3. The multilayer body as set forth in claim 1 or 2, wherein:
a contained amount of the color development pigment is not less than 0.2% by mass and not more than 4.0% by mass with respect to 100% by mass of the resin composition.

4. The multilayer body as set forth in any one of claims 1 through 3, wherein:
a thickness of the second layer is not less than 15 µm and not more than 70 µm.

5. The multilayer body as set forth in any one of claims 1 through 4, wherein:
a weight ratio of the white pigment to the color development pigment is not less than 3 and not more than 35.

6. The multilayer body as set forth in claim 1, wherein:
the isocyanate-based crosslinking agent is an aromatic-aliphatic isocyanate-based crosslinking agent.

7. The multilayer body as set forth in claim 6, wherein:
the aromatic-aliphatic isocyanate-based crosslinking agent is a xylenediisocyanate-based crosslinking agent.

## Patentansprüche

1. Mehrschichtkörper zur Verwendung in einem Laserbeschriftungsetikett, wobei der Mehrschichtkörper umfasst:
eine erste Schicht, die Laserlicht hindurchtreten lässt,
eine zweite Schicht, die mit dem Laserlicht eine Farbe entwickelt, und
eine dritte Schicht, die Haftvermögen aufweist,
wobei die erste Schicht, die zweite Schicht und die dritte Schicht in dieser Reihenfolge übereinander angeordnet sind,
wobei die zweite Schicht aus einer Harzzusammensetzung besteht, die ein Copolymer auf Acrylbasis, ein Vernetzungsmittel auf Isocyanatbasis, ein Farbentwicklungspigment und ein weißes Pigment enthält,
wobei das Vernetzungsmittel auf Isocyanatbasis aus (i) einem Vernetzungsmittel auf Basis eines aromatischaliphatischen Isocyanats oder (ii) einem Gemisch aus einem Vernetzungsmittel auf Basis eines aliphatischen oder alicyclischen Isocyanats und einem Vernetzungsmittel auf Basis eines aromatischen Isocyanats ausgewählt ist,
eine enthaltene Menge des Vernetzungsmittels auf Isocyanatbasis nicht weniger als 5 Masseteile und nicht mehr als Masseteile, bezogen auf 100 Masseteile des Copolymers auf Acrylbasis, beträgt und
die zweite Schicht mit der ersten Schicht in Kontakt ist.

2. Mehrschichtkörper nach Anspruch 1, wobei
das Farbentwicklungspigment eines oder mehrere, ausgewählt aus der Gruppe, bestehend aus Bismutoxid, einer Kupferverbindung, einer Molybdänverbindung und einer Antimonverbindung, ist.

3. Mehrschichtkörper nach Anspruch 1 oder 2, wobei
eine enthaltene Menge des Farbentwicklungspigments nicht weniger als 0,2 Masse-% und nicht mehr als 4,0 Masse-%, bezogen auf 100 Masse-% der Harzzusammensetzung, beträgt.

4. Mehrschichtkörper nach einem der Ansprüche 1 bis 3, wobei
eine Dicke der zweiten Schicht nicht weniger als 15 µm und nicht mehr als 70 µm beträgt.

5. Mehrschichtkörper nach einem der Ansprüche 1 bis 4, wobei
ein Gewichtsverhältnis des weißen Pigments zu dem Farbentwicklungspigment nicht weniger als 3 und nicht mehr als 35 beträgt.

6. Mehrschichtkörper nach Anspruch 1, wobei
das Vernetzungsmittel auf Isocyanatbasis ein Vernetzungsmittel auf Basis eines aromatischaliphatischen Isocyanats ist.

7. Mehrschichtkörper nach Anspruch 6, wobei
das Vernetzungsmittel auf Basis eines aromatischaliphatischen Isocyanats ein Vernetzungsmittel auf Xyloldiisocyanatbasis ist.

## Revendications

1. Corps multicouche pour son utilisation dans une étiquette de marquage au laser, ledit corps multicouche comprenant :
une première couche qui permet à de la lumière laser de passer au travers ;
une deuxième couche qui développe une couleur avec la lumière laser ; et
une troisième couche qui possède une adhésivité,
la première couche, la deuxième couche, et la troisième couche étant empilées dans cet ordre,
la deuxième couche consistant en une composition de résine contenant un copolymère à base d'acrylique, un agent de réticulation à base d'isocyanate, un pigment de développement de couleur, et un pigment blanc,
l'agent de réticulation à base d'isocyanate étant sélectionné parmi (i) un agent de réticulation à base d'isocyanate aromatique-aliphatique ou (ii) un mélange d'un agent de réticulation à base d'isocyanate aliphatique ou alicyclique et un agent de réticulation à base d'isocyanate aromatique,
une quantité contenue de l'agent de réticulation à base d'isocyanate n'étant pas inférieure à 5 parties en masse et pas supérieure à 40 parties en masse par rapport à 100 parties en masse du copolymère à base d'acrylique, et
la deuxième couche étant en contact avec la première couche,

2. Corps multicouche selon la revendication 1, dans lequel :
le pigment de développement de couleur est un ou plusieurs sélectionnés parmi le groupe consistant en de l'oxyde de bismuth, un composé de cuivre, un composé de molybdène, et un composé d'antimoine.

3. Corps multicouche selon la revendication 1 ou la revendication 2, dans lequel :
une quantité contenue du pigment de développement de couleur n'est pas inférieure à 0,2 % en masse et pas supérieure à 4,0 % en masse par rapport à 100 % en masse de la composition de résine.

4. Corps multicouche selon l'une quelconque des revendications 1 à 3, dans lequel :
une épaisseur de la deuxième couche n'est pas inférieure à 15 µm et pas supérieure à 70 µm.

5. Corps multicouche selon l'une quelconque des revendications 1 à 4, dans lequel :
un rapport en poids du pigment blanc sur le pigment de développement de couleur n'est pas inférieur à 3 et pas supérieur à 35.

6. Corps multicouche selon la revendication 1, dans lequel : l'agent de réticulation à base d'isocyanate est un agent de réticulation à base d'isocyanate aromatique-aliphatique.

7. Corps multicouche selon la revendication 6, dans lequel : l'agent de réticulation à base d'isocyanate aromatique-aliphatique est un agent de réticulation à base de xylène diisocyanate.
